# EUROPÄISCHE PATENTSCHRIFT

(11) **EP 2 975 455 B1**
(45) Veröffentlichungstag und Bekanntmachung des Hinweises auf die Patenterteilung: **22.05.2019**
(21) Anmeldenummer: 15172188.3
(22) Anmeldetag: 15.06.2015
(51) Int. Cl.: G03B 3/00, G03B 13/20, G03B 37/00, G02B 3/14

(54) **FOKUSSIERSYSTEM SOWIE KAMERAEINHEIT MIT EINEM FOKUSSIERSYSTEM**
FOCUSING SYSTEM AND CAMERA UNIT WITH A FOCUSING SYSTEM
SYSTEME DE FOCALISATION ET UNITE DE CAMERA DOTEE D'UN SYSTEME DE FOCALISATION

(30) Priorität: 17.07.2014 DE 202014103294 U
(43) Veröffentlichungstag der Anmeldung: 20.01.2016
(73) Patentinhaber: iPEK International GmbH, 87477 Sulzberg (DE)
(72) Erfinder: NADLER, Andreas, 87471 Bodelsberg (DE); KENNERKNECHT, Gerhard, 87561 Oberstdorf (DE)
(74) Vertreter: 2s-ip Schramm Schneider Bertagnoll Patent- und Rechtsanwälte Part mbB

(56) Entgegenhaltungen:
- DE-U1-202013 100 437
- JP-A- 2009 086 584

## Beschreibung

### Gebiet der Erfindung

Die Erfindung betrifft ein Fokussiersystem, insbesondere für eine Kameraeinheit eines Inspektionssystems, eine Kameraeinheit, insbesondere für ein Inspektionssystem, mit einem erfindungsgemäßen Fokussiersystem, sowie ein Inspektionssystem mit einer erfindungsgemäßen Kameraeinheit.

### Hintergrund der Erfindung und Stand der Technik

Bei der visuellen Inspektion bzw. Untersuchung von Kanälen, insbesondere Abwasserkanälen, Schächten, Anschlusskanälen, Grundstücksentwässerungsanlagen, Sickerwasserleitungen oder sonstiger abwassertechnischer Anlagen ist es bekannt, sogenannte TV-Kanalinspektionssysteme zu verwenden, die eine Kameraeinheit zur Aufnahme von Bildern und/oder Bewegtbildern aufweisen. Die aufgenommenen Bilddaten können an eine außerhalb des untersuchten Kanals bzw. Rohres angeordnete Kontrolleinrichtung übertragen und dort zur Anzeige gebracht werden. Für eine optimale Darstellung der betrachteten Umgebung bzw. eines sich im Kanal befindlichen Objektes ist es bekannt, die Kameraeinheit mit einer Fokussiereinrichtung auszustatten, um eine scharfe Abbildung der betrachteten Umgebung bzw. des betrachteten Objektes zu ermöglichen.

Nachteilig hierbei ist es allerdings, dass eine häufige Anpassung der Objektiveinstellung während eines Inspektionsvorganges zu einem erheblichen Zeitverlust führen kann. Insbesondere beim Schwenken der Kameraeinheit kann es notwendig sein, dass die Fokussierung ständig angepasst werden muss.

Ein weiterer Nachteil liegt darin, dass das Objektiv der Kameraeinheit verhältnismäßig viel Platz einnimmt, was insbesondere bei Inspektionssystemen für Kanalrohre mit kleinem Durchmesser nachteilig ist. Ferner sind Inspektionssysteme mit großen Kameraeinheiten nicht geeignet um andere kleine Hohlräume, etwa Hohlräume oder Rohre in Industrieanlagen oder Rotorblätter von Windkraftanlagen zu inspizieren.

### Aufgabe der Erfindung

Aufgabe der vorliegenden Erfindung ist es daher, die vorstehend genannten Nachteile zumindest teilweise zu vermeiden und Lösungen bereitzustellen, die einerseits ein einfaches, zeitsparendes bzw. schnelles Fokussieren ermöglichen und andererseits eine besonders platzsparende Ausgestaltung des Objektives bzw. der Fokussiereinrichtung und damit des gesamten Inspektionssystems erlauben, um auch Rohre oder Hohlräume, etwa in Industrieanlagen oder sonstigen Anlagen, mit kleinem Durchmesser inspizieren zu können.

### Erfindungsgemäße Lösung

Erfindungsgemäß wird diese Aufgabe mit einem Fokussiersystem, insbesondere für eine Kameraeinheit eines Inspektionssystems, mit einer Kameraeinheit mit einem erfindungsgemäßen Fokussiersystem sowie einem Inspektionssystem mit einer erfindungsgemäßen Kameraeinheit gemäß den unabhängigen Schutzansprüchen gelöst. Vorteilhafte Weiterbildungen und Ausgestaltungen der Erfindung sind in den jeweiligen abhängigen Schutzansprüchen angegeben.

Bereitgestellt wird demnach ein Fokussiersystem, insbesondere für eine Kameraeinheit eines Inspektionssystems, insbesondere Rohrinspektionssystem, umfassend
- eine Abstandsmessvorrichtung zum Messen eines Abstandes zu einem Objekt,
- eine mit der Abstandsmessvorrichtung operativ gekoppelte Steuereinrichtung, und
- eine mit der Steuereinrichtung operativ gekoppelte und als Flüssiglinse ausgestaltete optische Linse,
wobei die Steuereinrichtung angepasst ist, anhand der von der Abstandsmessvorrichtung entgegengenommenen Abstandsdaten die Brennweite der Flüssiglinse einzustellen bzw. zu verändern.

Dadurch wird in vorteilhafter Weise ein besonders platzsparendes Objektiv möglich, das neben einer automatischen Fokussierung aufgrund der kurzen Reaktionszeit der Flüssiglinse, die weniger als 1 ms betragen kann, auch eine besonders schnelle Fokussierung ermöglicht wird. Ein schnelles Fokussieren ist insbesondere dann vorteilhaft, wenn sich das Inspektionssystem im Kanalrohr fortbewegt und/oder wenn die Kameraeinheit verschwenkt wird und sich dabei der Abstand zu dem betrachteten Objekt häufig oder sogar fortlaufend verändert. Insbesondere wird dadurch gewährleistet, dass das mit der Kameraeinheit betrachtete Objekt zu jedem Zeitpunkt scharf gestellt ist.

Zwischen der Steuereinrichtung und der Flüssiglinse kann eine Treiberschaltung angeordnet sein, die operativ mit der Steuereinrichtung und mit der Flüssiglinse gekoppelt ist. Damit können die für die Steuerung des elektrischen Feldes der Flüssiglinse benötigten elektrischen Spannungen von bis zu 100 V oder mehr zur Verfügung gestellt werden.

In einer vorteilhaften Ausgestaltung der Erfindung umfasst die Abstandsmessvorrichtung eine optische Abstandsmessvorrichtung. Die optische Abstandsmessvorrichtung kann eine Infrarotlicht-Abstandsmessvorrichtung mit zumindest einer Infrarotlicht emittierende Diode und mit zumindest einer Infrarot-Photodiode, insbesondere Multi-Element-Photodiode oder Lateraldiode, umfassen. Hierdurch wird eine berührungslose und insbesondere schnelle Messung des Abstandes zwischen der Abstandsmessvorrichtung und einem Objekt ermöglicht.

In einer Ausgestaltung der Erfindung kann es vorgesehen sein, dass die Abstandsmessvorrichtung so relativ zur Flüssiglinse angeordnet ist, dass die optische Achse der Abstandsmessvorrichtung im Wesentlichen parallel zur optischen Achse der Flüssiglinse verläuft. Vorteilhaft ist hierbei zudem, wenn der Abstand der optischen Achse der Abstandsmessvorrichtung zur optischen Achse der Flüssiglinse so gering wie möglich ist. Dadurch ist weitestgehend gewährleistet, dass der Abstand zu jenem Punkt des Objektes gemessen wird, der sich auf der optischen Achse bzw. der sich nahe der optischen Achse der Flüssiglinse befindet.

In einer Weiterbildung der Erfindung kann die Abstandsmessvorrichtung eine erste Abstandsmessvorrichtung und zumindest eine zweite Abstandsmessvorrichtung umfassen. Vorteilhafterweise ist die zumindest eine zweite Abstandsmessvorrichtung beabstandet zur ersten Abstandsmessvorrichtung angeordnet. Die optische Achse der ersten Abstandsmessvorrichtung und die optische Achse der zumindest einen zweiten Abstandsmessvorrichtung können im Wesentlichen parallel zur optischen Achse der Flüssiglinse verlaufen.

Vorteilhaft ist hierbei, wenn die Steuereinrichtung angepasst ist, anhand der von der ersten Abstandsmessvorrichtung und der von der zumindest einen zweiten Abstandsmessvorrichtung entgegengenommenen Abstandsdaten die Brennweite der Flüssiglinse einzustellen bzw. zu verändern.

Die Steuereinrichtung kann hierbei angepasst sein, aus den von der ersten Abstandsmessvorrichtung und aus den von der zumindest einen zweiten Abstandsmessvorrichtung entgegengenommenen Abstandsdaten einen mittleren Abstand zum Objekt zu ermitteln und anhand des mittleren Abstandes die Brennweite der Flüssiglinse einzustellen bzw. zu verändern. Damit können in vorteilhafter Weise Abweichungen der Abstände zwischen den Abstandsmessvorrichtungen und dem Objekt zu dem Abstand zwischen der Flüssiglinse und dem Objekt weitestgehend kompensiert werden, sodass eine optimale Fokussierung auch dann gewährleistet ist, wenn der Abstand zwischen einer Abstandsmessvorrichtung und dem Objekt erheblich von dem Abstand zwischen der Flüssiglinse und dem Objekt abweicht.

In einer vorteilhaften Ausgestaltung der Erfindung kann das Fokussiersystem eine Umlenkeinrichtung aufweisen, die angepasst ist, den Strahlengang der Abstandsmessvorrichtung so umzulenken, dass dieser im Wesentlichen koaxial zur optischen Achse der Flüssiglinse durch die Flüssiglinse geführt wird. Damit kann in vorteilhafter Weise der Abstand zwischen der Flüssiglinse und jenem Punkt des Objektes gemessen werden, der auf der optischen Achse der Flüssiglinse liegt, was wiederum eine besonders präzise Fokussierung ermöglicht.

Die Umlenkeinrichtung kann hierbei einen Strahlteiler, etwa einen halbdurchlässigen Spiegel, aufweisen, der in der optischen Achse der Flüssiglinse angeordnet ist und um einen bestimmten Winkel zur optischen Achse der Flüssiglinse geneigt ist. Die Umlenkeinrichtung kann zudem zumindest einen Umlenkspiegel aufweisen.

In einer Ausgestaltung der Erfindung ist die Steuereinrichtung angepasst, die Brennweite der Flüssiglinse in Echtzeit einzustellen bzw. zu verändern. Damit ist gewährleistet, dass bei einem Bewegen des Inspektionssystems bzw. bei einem Bewegen, beispielsweise Schwenken, der Kameraeinheit das betrachtete Objekt auch während der Bewegung unabhängig von der Geschwindigkeit der Bewegung scharf abgebildet wird.

Die Steuereinrichtung kann ferner angepasst sein, beim Einstellen der Brennweite der Flüssiglinse einen horizontalen Versatz zwischen der Flüssiglinse und der Abstandsmessvorrichtung zu berücksichtigen.

Vorteilhaft ist es, wenn die Brennweite automatisch einstellbar ist.

In einer Ausgestaltung der Erfindung kann die Brennweite auch manuell einstellbar sein.

Vorteilhaft ist es, wenn das Fokussiersystem von einem manuellen Betriebsmodus in einen automatischen Betriebsmodus zum Einstellen der Brennweite umschaltbar ist.

Des Weiteren wird durch die Erfindung eine Kameraeinheit, insbesondere für ein Inspektionssystem, insbesondere Rohrinspektionssystem, umfassend eine Bildaufnahmeeinrichtung und ein der Bildaufnahmeeinrichtung zugeordnetes erfindungsgemäßes Fokussiersystem bereitgestellt.

Die Bildaufhahmeeinrichtung kann einen digitalen Bildsensor, insbesondere CCD-Bildsensor oder CMOS-Bildsensor, umfassen.

Die Kameraeinheit kann eine Beleuchtungseinheit aufweisen bzw. der Kameraeinheit kann eine Beleuchtungseinheit zugeordnet sein.

Die Beleuchtungseinheit kann eine Anzahl von Leuchtmittel, insbesondere lichtemittierende Dioden, aufweisen, die radial um die Flüssiglinse des Fokussiersystems herum angeordnet sind.

Die Beleuchtungseinheit kann einen Ring aufweisen, an dem die Leuchtmittel und vorzugsweise zumindest eine Abstandsmessvorrichtung angeordnet sind.

In einer vorteilhaften Ausgestaltung der erfindungsgemäßen Kameraeinheit kann die Kameraeinheit eine Speicher- und/oder Datenverarbeitungseinrichtung aufweisen oder mit einer Speicher- und/oder Datenverarbeitungseinrichtung koppelbar sein, zum Speichern oder Zwischenspeichern der von der Kameraeinheit aufgenommenen Bilder.

Der Kameraeinheit können Detektionsmittel zugeordnet sein, zum Detektieren, ob zwischen der Kameraeinheit und einer externen Kontrolleinheit Daten übertragbar sind, wobei die Detektionsmittel angepasst sind, der Steuereinrichtung des Fokussiersystems zu signalisieren, dass zwischen der Kameraeinheit und der externen Kontrolleinheit keine Daten übertragbar sind, und wobei die Steuereinrichtung angepasst ist, in einen automatischen Betriebsmodus zum Einstellen der Brennweite der Flüssiglinse umzuschalten, wenn keine Daten übertragbar sind.

Wenn beispielsweise die Datenübertragung zwischen der Kameraeinheit und einer von einem Bedienpersonal bedienten externen Kontrolleinheit unterbrochen ist, wird dadurch gewährleistet, dass das betrachtete Motiv weiterhin scharf auf der Bildaufnahmeeinrichtung abgebildet wird.

Die Kameraeinheit kann zudem angepasst sein, die aufgenommenen Bilder in der Speicher- und/oder Datenverarbeitungseinrichtung zu speichern, wenn keine Daten übertragbar sind.

Das Speichern bzw. Zwischenspeichern der aufgenommenen Bilder in Kombination mit dem automatischen Einstellen der Brennweite der Flüssiglinse hat den Vorteil, dass das Inspektionssystem beispielsweise auch bei einer Unterbrechung der Datenübertragung im zu inspizierenden Kanalrohr fortbewegt werden kann, wobei sichergestellt ist, dass die von der Kameraeinheit betrachteten Objekte scharf abgebildet werden.

Ferner wird durch die Erfindung ein Inspektionssystem bereitgestellt, welches eine erfindungsgemäße Kameraeinheit aufweist. Die Kameraeinheit kann schwenkbar an einem Fahrwagen des Inspektionssystems angeordnet sein. In einer alternativen Ausgestaltung kann das Inspektionssystem als Schiebesystem ausgestaltet sein, an dessen vorderen Ende eine erfindungsgemäße Kameraeinheit angeordnet ist.

Das Fokussiersystem bzw. Objektiv kann besonders platzsparend ausgestaltet werden, was eine besonders platzsparende Ausgestaltung der Kameraeinheit ermöglicht, sodass auch ein besonders platzsparender Einbau der erfindungsgemäßen Kameraeinheit in dem Inspektionssystem erlaubt.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine Ausgestaltung eines erfindungsgemäßen Fokussiersystems;
- Fig. 2: eine beispielhafte Ausgestaltung eines erfindungsgemäßen Inspektionssystems mit einer daran angeordneten erfindungsgemäßen Kameraeinheit;
- Fig. 3: ein konkretes Beispiel eines erfindungsgemäßen Inspektionssystems mit einer daran angeordneten erfindungsgemäßen Kameraeinheit;
- Fig. 4: eine erfindungsgemäße Kameraeinheit bzw. Kamerakopf mit einer daran angeordneten Abstandsmessvorrichtung eines erfindungsgemäßen Fokussiersystems;
- Fig. 5: eine erfindungsgemäße Kameraeinheit in einer Ansicht von vorne;
- Fig. 6: erfindungsgemäße Weiterbildungen eines erfindungsgemäßen Fokussiersystems; und
- Fig. 7: ein weiteres konkretes Beispiel eines erfindungsgemäßen Inspektionssystems mit einer daran angeordneten erfindungsgemäßen Kameraeinheit.

### Detaillierte Beschreibung der Erfindung

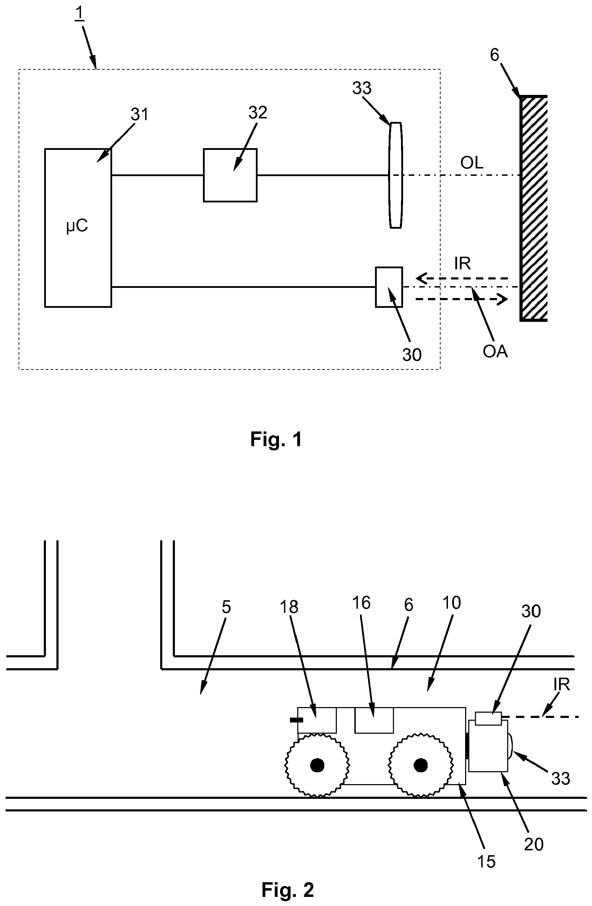

**Fig. 1** zeigt ein erfindungsgemäßes Fokussiersystem 1.

Das Fokussiersystem 1 umfasst bzw. weist im Wesentlichen eine als Flüssiglinse 33 ausgestaltete optische Linse, eine Steuereinrichtung 31, die als Mikrokontroller ausgestaltet sein kann, eine Abstandsmessvorrichtung 30, die als optische Abstandsmessvorrichtung ausgestaltet sein kann, und eine Treiberschaltung 32 auf. Die Flüssiglinse 33 ist mit der Treiberschaltung 32 gekoppelt. Die Treiberschaltung 32 ist ihrerseits über einen Digitalbus mit der Steuereinrichtung 31 gekoppelt. Die Abstandsmessvorrichtung 30 ist ebenfalls über einen Digitalbus mit der Steuereinrichtung 31 gekoppelt.

Die Steuereinrichtung bzw. der Mikrokontroller 31 und die Abstandsmessvorrichtung 30 sind so ausgestaltet, dass die Steuereinrichtung 31 von der Abstandsmessvorrichtung 30 Abstandsdaten entgegennehmen kann bzw. die Steuereinrichtung 30 aus von der Abstandsmessvorrichtung entgegengenommene Daten Abstandsdaten ermitteln kann. Die Abstandsdaten geben den Abstand zwischen der Abstandsmessvorrichtung 30 und einem auf der optischen Achse OA der Abstandsmessvorrichtung 30 liegenden Objekt 6 an. Das Objekt kann beispielsweise eine Rohrwandung bzw. Innenwandung eines Kanalrohres oder ein sich im Kanalrohr befindliches Objekt sein.

Die Steuereinrichtung 31 ist angepasst, anhand der Abstandsdaten die Brennweite bzw. den Fokus der Flüssiglinse 33 einzustellen bzw. zu verändern, sodass ein von einer Kameraeinheit, dem die Flüssiglinse zugeordnet ist, betrachtetes Objekt scharf abgebildet wird. Mittels der Treiberschaltung 32 werden die für das Steuern des elektrischen Feldes der Flüssiglinse 33 erforderlichen elektrischen Spannungen bereitgestellt, wobei in einer Ausgestaltung der Erfindung die Treiberschaltung 32 auch Bestandteil der Steuereinrichtung sein kann bzw. in die Steuereinrichtung 31 integriert sein kann.

Erfindungsgemäß ist die Abstandsmessvorrichtung 30 als optische Abstandsmessvorrichtung, insbesondere als Infrarotlicht-Abstandsmessvorrichtung ausgestaltet. Die Infrarotlicht-Abstandsmessvorrichtung kann hier eine Infrarotlicht emittierende Diode und eine Infrarot-Fotodiode, beispielsweise eine Multi-Element-Fotodiode oder Lateraldiode umfassen. Die Infrarotlicht emittierende Diode kann zudem temperaturkompensiert sein, sodass gewährleistet ist, dass unabhängig von der Temperatur im Rohrinneren immer dieselbe Lichtmenge emittiert wird, um Messfehler aufgrund von Temperaturschwankungen zu vermeiden.

Bei der in Fig. 1 gezeigten Ausgestaltung eines erfindungsgemäßen Fokussiersystems 1 ist die Flüssiglinse 33 so relativ zur Abstandsmessvorrichtung 30 angeordnet, dass die optische Achse OL der Flüssiglinse 33 im Wesentlichen parallel zur optischen Achse der Abstandsmessvorrichtung 30 verläuft. Zudem sind die Flüssiglinse 33 und die Abstandsmessvorrichtung 30 so relativ zueinander angeordnet, dass der Abstand zwischen der optischen Achse OL der Flüssiglinse und der optischen Achse OA der Abstandsmessvorrichtung möglichst klein bzw. minimiert ist. Dadurch ist sichergestellt, dass die Abstandsmessvorrichtung 30 den Abstand zu einem Punkt des Objektes 6 misst, der möglichst nahe an jenem Punkt des Objektes 6 liegt, der sich auf der optischen Achse OL der Flüssiglinse 33 befindet. Es kann daher davon ausgegangen werden, dass der Abstand zwischen der Abstandsmessvorrichtung 30 und dem Objekt 6 in der Regel nahezu identisch zu dem Abstand zwischen der Flüssiglinse 33 und dem Objekt 6 ist.

In einer Weiterbildung der Erfindung kann das Fokussiersystem eine oder mehrere zusätzliche, in Fig. 1 nicht gezeigte, Abstandsmessvorrichtungen aufweisen, mit denen ebenfalls ein Abstand zu dem Objekt 6 gemessen werden kann. Die Steuereinrichtung 31 kann hierbei aus den gemessenen Abständen einen Mittelwert bilden und anhand dieses Mittelwertes, d.h. mittlerer Abstand, die Brennweite der Flüssiglinse 33 einstellen bzw. verändern. Der mittlere Abstand entspricht hierbei weitgehend dem Abstand zwischen der Flüssiglinse 33 und dem Objekt 6. Unterschiedliche Abstände des Objektes 6 zu den einzelnen Abstandsmessvorrichtungen, die beispielsweise aufgrund einer unregelmäßigen Oberfläche des Objektes 6 zu Stande kommen können, können so effektiv kompensiert werden.

**Fig. 2** zeigt eine schematische Darstellung eines erfindungsgemäßen Inspektionssystems 10 mit einer daran angeordneten erfindungsgemäßen Kameraeinheit 20.

Das Inspektionssystem 10 weist hier einen Inspektionswagen 15 auf, an dessen vorderen Ende die Kameraeinheit bzw. der Kamerakopf 20 angeordnet ist. An der Kameraeinheit 20 ist ferner eine erfindungsgemäße Abstandsmessvorrichtung 30 angeordnet. Bei dem in Fig. 2 gezeigten Beispiel eines erfindungsgemäßen Inspektionssystems 10 ist dieses über eine Sende-/Empfangseinheit 18 zur drahtlosen Datenübertragung mit einer außerhalb des Kanalrohres angeordneten, hier nicht gezeigten Kontrolleinheit verbunden. Über die Sende-/Empfangseinheit 18 können Messdaten, insbesondere die von der Kameraeinheit aufgenommenen Bilddaten sowie gegebenenfalls die von der Abstandsmessvorrichtung 30 ermittelten Abstandsdaten drahtlos an die Kontrolleinrichtung übertragen werden bzw. Steuerdaten von der Kontrolleinrichtung empfangen werden. Die Steuerdaten können beispielsweise Steuerbefehle umfassen, mit denen die Kameraeinheit gesteuert, beispielsweise geschwenkt, werden kann. Vorteilhaft ist hierbei, dass mit Hilfe des erfindungsgemäßen Fokussiersystems 1 der Fokus bzw. die Brennweite der Flüssiglinse 33 automatisch einstellbar ist, sodass jedenfalls für das Fokussieren keine Steuerdaten von einer außerhalb des Kanalsystems angeordneten Kontrolleinrichtung an das Inspektionssystem übertragen werden müssen.

In einer alternativen Ausgestaltung kann das Inspektionssystem 10 auch über ein Strom- bzw. Datenkabel mit einer außerhalb des Kanalsystems angeordneten Kontrolleinheit gekoppelt sein.

Bei der in Fig. 2 gezeigten Ausgestaltung des Inspektionssystems ist es vorgesehen, den Inspektionswagen 15 bzw. die an dem Inspektionswagen 15 angeordneten Komponenten mit einer Batterie bzw. einem Akkumulator mit Energie zu versorgen, sodass auf eine Energiezufuhr von außen verzichtet werden kann. Der Inspektionswagen 15 kann sich so gegebenenfalls autonom im Kanalrohr 5 fortbewegen, wobei gleichzeitig sichergestellt ist, dass die sich im Blickfeld der Kameraeinheit 20 befindlichen Objekte scharf abgebildet werden.

Ferner kann der Kamerawagen 15 eine Speichereinrichtung und/oder Datenverarbeitungseinrichtung 16 aufweisen. In der Speichereinrichtung 16 können die von der Kameraeinheit 20 aufgenommenen Bilddaten gespeichert bzw. zwischengespeichert werden. Ein Zwischenspeichern der Bilddaten ist insbesondere dann vorteilhaft, wenn eine Datenübertragung zwischen einer externen Kontrolleinheit und dem Inspektionssystem 10 nicht möglich ist, etwa weil eine Funkverbindung zur externen Kontrolleinheit abgebrochen ist. Der Inspektionswagen 15 kann sich dann weiterhin im Kanalrohr 5 fortbewegen und dabei die von der Kameraeinheit aufgenommenen Bilder in der Speichereinrichtung 16 Zwischenspeichern. Aufgrund der automatischen Fokussierung mit Hilfe des Fokussiersystems 1 ist hierbei gewährleistet, dass die sich auf der optischen Achse OL der Flüssiglinse 33 befindlichen Objekte bzw. Motive in jedem Fall scharf abgebildet werden.

Es kann weiterhin vorgesehen sein, dass das erfindungsgemäße Fokussiersystem 1 angepasst ist, den Fokus bzw. die Brennweite der Flüssiglinse in Echtzeit einzustellen bzw. zu verändern. Damit ist gewährleistet, dass plötzlich in die optische Achse OL der Flüssiglinse 33 hineintretende Objekte ohne bzw. nahezu ohne zeitliche Verzögerung scharf abgebildet werden. Insbesondere beim Verschwenken des Kamerakopfes bzw. der Kameraeinheit 20, beispielsweise in Richtung zur Rohrwandung 6 kann sich der Abstand zwischen der Flüssiglinse 33 und dem auf der optischen Achse OL der Flüssiglinse 33 liegenden Punkt des Objektes 6 sehr schnell ändern. Durch das Einstellen bzw. Verändern der Brennweite der Flüssiglinse in bzw. nahezu in Echtzeit ist gewährleistet, dass das von der Kameraeinheit 20 erfasste Objekt während des gesamten Schwenkvorganges scharf abgebildet wird.

Die Kameraeinheit 20 oder der Fahrwagen 15 kann ein Detektionsmittel oder eine Sensoreinheit aufweisen, die angepasst ist zu ermitteln, ob eine Datenübertragung zwischen dem Inspektionssystem und einer externen Kontrolleinheit möglich ist. Wird von dem Detektionsmittel detektiert, dass eine Datenübertragung nicht möglich ist, etwa aufgrund einer zusammengebrochenen Funkverbindung, kann das Detektionsmittel dem Fokussiersystem 1 signalisieren, dass die Steuereinrichtung 31 des Fokussiersystems 1 in einen automatischen Betriebsmodus umzuschalten ist, in dem die Brennweite der Flüssiglinse 33 automatisch eingestellt bzw. verändert wird. Gleichzeitig kann das Detektionsmittel die Kameraeinheit bzw. das Inspektionssystem 10 anweisen, die nachfolgend aufgenommenen Bilddaten in der Speichereinrichtung 16 zwischenzuspeichern.

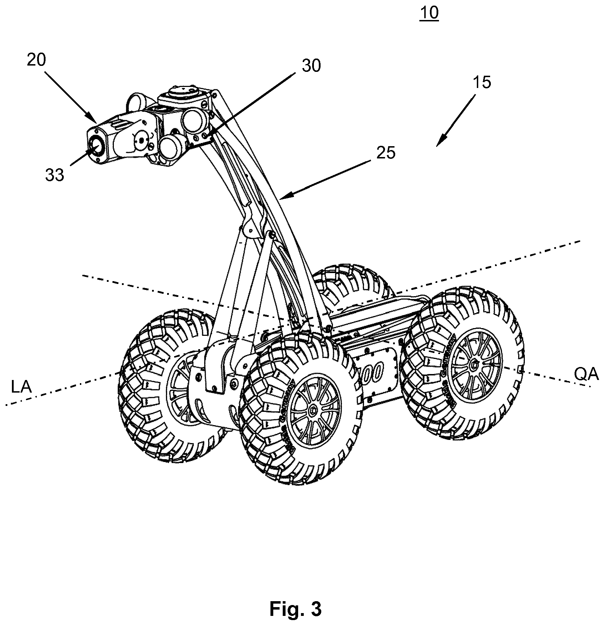

**Fig. 3** zeigt ein konkretes Beispiel eines erfindungsgemäßen Inspektionssystems 10. Das Inspektionssystem 10 umfasst einen Inspektionswagen 15, der eine Hebeeinheit 25 aufweist, die nach vorne und nach hinten verschwenkt werden kann. In einer hier nicht gezeigten Ausgestaltung ist die Hebeeinheit 25 auch seitlich schwenkbar.

An dem oberen Ende der Hebeeinheit 25 ist eine erfindungsgemäße Kameraeinheit 20 angeordnet sowie zwei Abstandsmessvorrichtungen 30 eines erfindungsgemäßen Fokussiersystems, wobei eine erste Abstandsmessvorrichtung an der rechten Seite und eine zweite Abstandsmessvorrichtung an der linken Seite des Kamerakopfes 20 angeordnet sind. In der hier gezeigten Ausgestaltung ist die Kameraeinheit 20 unabhängig von den Abstandsmessvorrichtungen 30 um seine Längsachse drehbar. Ferner ist die Kameraeinheit 20 auch relativ zur Hebeeinheit 25 schwenkbar, wobei dann die Abstandsmessvorrichtungen 30 ebenfalls mitgeschwenkt werden, sodass die optischen Achsen OA der Abstandsmessvorrichtungen auch während eines Schwenkvorganges im Wesentlichen parallel zur optischen Achse OL der Flüssiglinse 33 verlaufen.

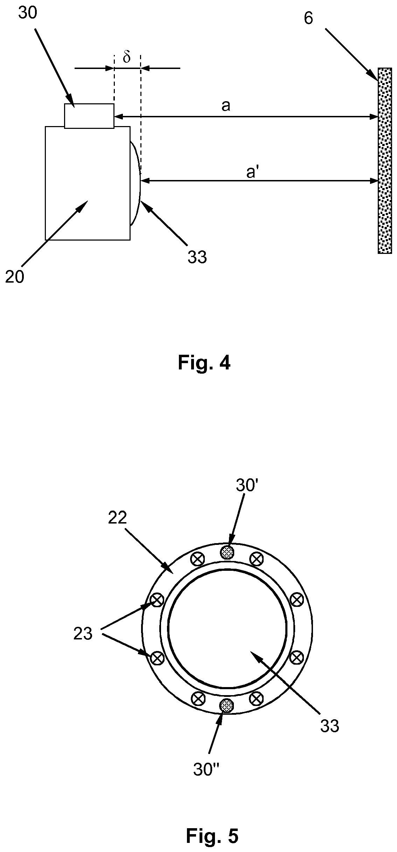

**Fig. 4** zeigt eine erfindungsgemäße Kameraeinheit 20 eines erfindungsgemäßen Inspektionssystems mit einem erfindungsgemäßen Fokussiersystem, wobei hier die Flüssiglinse 33 und die an dem Kamerakopf angeordnete Abstandsmessvorrichtung 30 gezeigt sind.

Der Fokus bzw. die Brennweite der Flüssiglinse 33 wird hier basierend auf dem Messergebnis der Abstandsmessvorrichtung 30 eingestellt bzw. verändert. Mit der Abstandsmessvorrichtung 30 wird hier ein erster Abstand a zwischen der Abstandsmessvorrichtung und einem Objekt 6, etwa der Rohrinnenwandung eines Kanalrohres gemessen. Aus dem gemessenen Abstand a kann ein Abstand a' der Flüssiglinse 33 zur Rohrinnenwandung 6 ermittelt werden, wenn ein horizontaler Versatz δ zwischen der Abstandsmessvorrichtung 30 und der Flüssiglinse 33 bekannt ist. Unter Berücksichtigung des ermittelten Abstandes a' zwischen der Flüssiglinse 33 und der Rohrinnenwandung 6 kann der Fokus bzw. die Brennweite der Flüssiglinse 33 automatisch entsprechend eingestellt werden. Damit ist gewährleistet, dass ein scharfes Bild des Objektes auch dann zur Verfügung gestellt werden kann, wenn der Abstand der Abstandsmessvorrichtung 30 zum Objekt aufgrund eines horizontalen Versatzes größer ist als der Abstand der Flüssiglinse 33 zu diesem Objekt.

**Fig. 5** zeigt eine erfindungsgemäße Kameraeinheit bzw. einen Ausschnitt davon in einer Ansicht von vorne.

Die Kameraeinheit weist eine Beleuchtungseinheit zum Ausleuchten der Umgebung auf. Die Beleuchtungseinheit besteht hier im Wesentlichen aus einem Ring, der um die Flüssiglinse 33 herum angeordnet ist. An dem Ring sind eine Anzahl von Leuchtmittel 23, vorzugsweise lichtemittierende Dioden angeordnet. Ferner sind an dem Ring bei der in Fig. 5 gezeigten Ausgestaltung eine erste Abstandsmessvorrichtung 30' und eine zweite Abstandsmessvorrichtung 30" angeordnet, wobei die erste Abstandsmessvorrichtung 30' oberhalb der Flüssiglinse 33 und die zweite Abstandsmessvorrichtung 30" unterhalb der Flüssiglinse 33 angeordnet sind. Bei dieser gegenüberliegenden Anordnung der beiden Abstandsmessvorrichtungen 30', 30" wird weitgehend gewährleistet, dass der aus den beiden Abständen ermittelte mittlere Abstand nahezu dem Abstand zwischen der Flüssiglinse 33 und dem Objekt entspricht.

In einer Ausgestaltung der Erfindung kann der Ring bzw. die Beleuchtungseinheit 22 drehbar angeordnet sein, sodass durch Drehen des Ringes mehrere Abstände zwischen einer an dem Ring angeordneten Abstandsmessvorrichtung und einem Objekt gemessen werden können, aus denen dann ein mittlerer Abstand ermittelt werden kann.

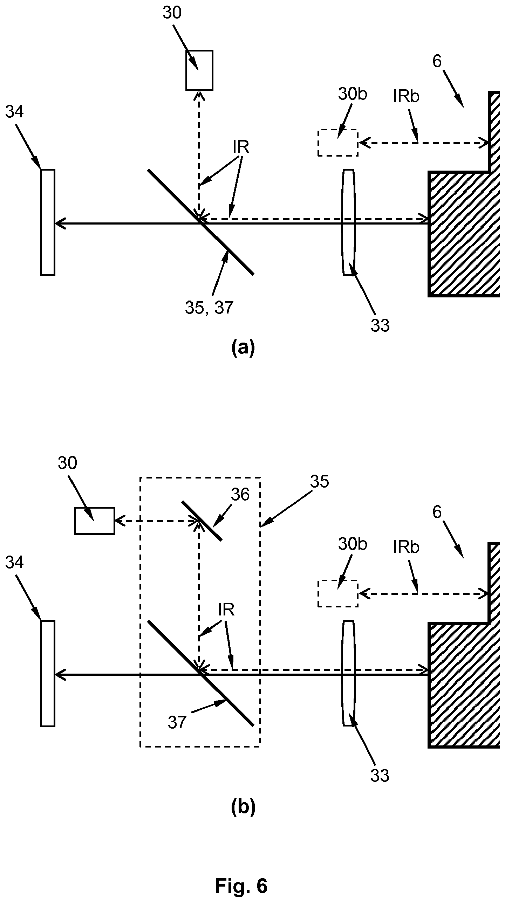

**Fig. 6** zeigt zwei Ausgestaltungen einer erfindungsgemäßen Weiterbildung eines erfindungsgemäßen Fokussiersystems 1.

Gemäß der Weiterbildungen gemäß Abbildung (a) und Abbildung (b) weist das Fokussiersystem eine Umlenkeinrichtung 35 auf, mit der der Strahlengang der Abstandsmessvorrichtung 30 so umgelenkt werden kann, dass dieser im Wesentlichen koaxial zur optischen Achse der Flüssiglinse 33 durch die Flüssiglinse 33 geführt wird.

Damit kann der tatsächliche Abstand der Flüssiglinse 33 zu jenem Punkt des Objektes 6 gemessen werden, der auf der optischen Achse OL der Flüssiglinse 33 liegt. Bei einer Anordnung der Abstandsmessvorrichtung 30b derart relativ zur Flüssiglinse 33, dass der Strahlengang der Infrarotstrahlen IRb der Abstandsmessvorrichtung 30b im Wesentlichen parallel und beabstandet zur optischen Achse der Flüssiglinse 33 verläuft, kann es vorkommen, dass der Abstand zwischen der Abstandsmesseinrichtung 30b und dem Objekt 6 erheblich von dem Abstand zwischen der Flüssiglinse 33 und dem Objekt 6 abweicht, wie in Fig. 6 beispielhaft durch die im Objekt 6 vorhandene Stufe gezeigt. Dies kann zu einer fehlerhaften Fokussierung führen.

Unter Verwendung einer Umlenkeinrichtung, wie vorstehend erläutert, ist hingegen gewährleistet, dass der Abstand genau zu jenem Punkt gemessen wird, der auf der optischen Achse OL der Flüssiglinse 33 liegt. Dadurch kann der Fokus bzw. die Brennweite der Flüssiglinse 33 noch besser bzw. noch genauer eingestellt werden.

Bei der in Abbildung (a) gezeigten Ausgestaltung einer Umlenkeinrichtung 35 weist diese einen Strahlteiler 37, etwa einen halbdurchlässigen Spiegel, auf, der in der optischen Achse der Flüssiglinse 33 angeordnet ist und um einen bestimmten Winkel zur optischen Achse der Flüssiglinse 33 geneigt ist. Die von der Abstandsmessvorrichtung 30 emittierten Infrarotstrahlen IR werden von dem Strahlteiler 27 umgelenkt, sodass die Infrarotstrahlen im Folgenden koaxial zur optischen Achse der Flüssiglinse durch die Flüssiglinse 33 geführt werden. In umgekehrter Richtung gelangen die von dem Objekt 6 reflektierten Infrarotstrahlen wieder zum Strahlteiler 27 und werden von diesem zur Abstandsmesseinrichtung 30 umgelenkt. Das sichtbare Licht gelangt ebenfalls durch die Flüssiglinse 33 zu dem Strahlteiler 37, wo es diesen zumindest teilweise passiert und auf eine Bildaufnahmeeinrichtung, etwa ein CCD-Bildsensor, auftrifft. Ein Teil des sichtbaren Lichtes wird dabei zur Abstandsmessvorrichtung 30 umgelenkt, was auf die Abstandsmessung allerdings keinen Einfluss hat. Ein Teil der von dem Objekt 6 reflektierten Infrarotstrahlen IR passiert den Strahlteiler 37 und gelangt bis zur Bildaufnahmeeinrichtung 34, was auf das aufgenommene Bild ebenfalls keinen Einfluss hat. Anstelle eines CCD-Bildsensors kann auch eine CMOS-Bildsensor oder ein anderer für die digitale Bildaufnahme geeigneter Sensor vorgesehen sein.

In Abbildung (b) ist eine alternative Ausgestaltung einer Umlenkeinrichtung 35 einer Weiterbildung eines erfindungsgemäßen Fokussiersystems gezeigt. Die Umlenkeinrichtung 35 weist hier neben einem Strahlteiler 37 auch einen beabstandet zum Strahlenteiler 37 angeordneten Umlenkspiegel 36 auf. Der Umlenkspiegel 36 ist vorgesehen, die von der Abstandsmessvorrichtung 30 emittierten Infrarotstrahlen IR so umzulenken, dass sie in einem bestimmten Winkel auf den Strahlteiler 37 auftreffen und dort so umgelenkt werden, dass sie im Wesentlichen koaxial zur optischen Achse der Flüssiglinse durch die Flüssiglinse geführt werden.

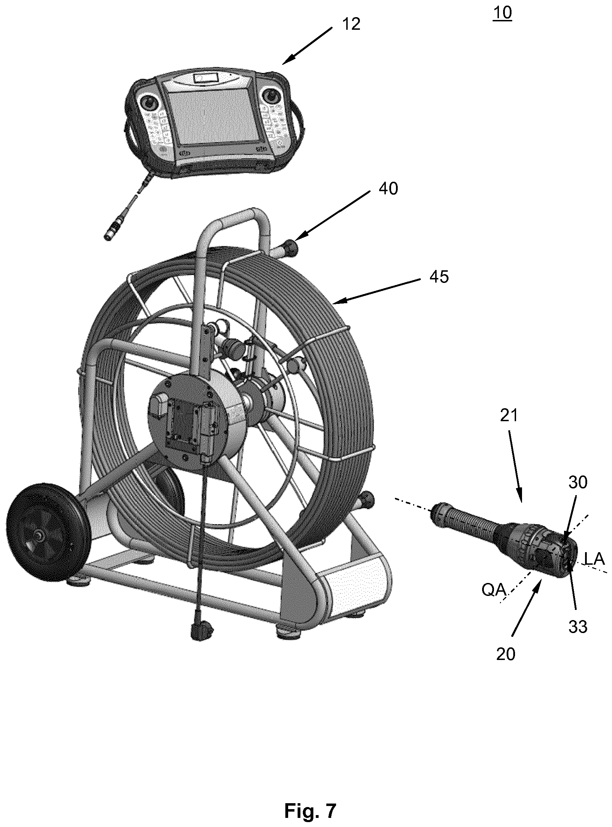

**Fig. 7** zeigt eine weitere konkrete Ausführungsform eines erfindungsgemäßen Inspektionssystems 10. Das Inspektionssystem 10 umfasst hier eine Anzeige- und/oder Kontrolleinheit 12, eine Haspel 40, an der ein Schiebeaal 45 aufgewickelt ist, und eine Schiebeeinheit 21, die eine Kameraeinheit 20 mit einem erfindungsgemäßen Fokussiersystem aufweist. Die Schiebeeinheit 21 wird mit dem einen Ende des Schiebeaals 45 verbunden, die Anzeige- und/oder Kontrolleinheit 12 wird mit dem anderen Ende des Schiebeaals 45 verbunden. Der Schiebeaal 45 weist eine gewisse Steifigkeit auf, um die Schiebeeinheit 21 in ein Rohr bzw. Kanalrohr schieben zu können. Über den Schiebeaal 45 ist die Schiebeeinheit 21 mit der Anzeige- und/oder Kontrolleinheit 12 operativ gekoppelt. Dadurch können Messdaten, beispielsweise Bilddaten der Schiebeeinheit 21 an die Anzeige- und/oder Kontrolleinheit 12 übertragen werden und umgekehrt können Steuerdaten von der Anzeige- und/oder Kontrolleinheit 12 an die Schiebeeinheit 21 übertragen werden. Dieses Inspektionssystem zeichnet sich insbesondere durch die kompakte Bauweise der in das Rohr zu verbringenden Schiebeeinheit 21 aus, sodass auch Rohre bzw. Kanäle mit besonders kleinem Durchmesser inspiziert bzw. überprüft werden können.

Um eine besonders kompakte Bauweise der Schiebeeinheit 21 zu ermöglichen, ist es von Vorteil, wenn auch die Kameraeinheit 20 so kompakt wie möglich ausgestaltet werden kann. Durch das erfindungsgemäße Fokussiersystem wird eine besonders kompakte Bauweise der Kameraeinheit ermöglicht, weil insbesondere ein Objektiv mit einer Flüssiglinse besonders kompakt realisierbar ist.

Die Schiebeeinheit 21 und insbesondere der an der Schiebeeinheit angeordnete Kamerakopf bzw. Kameraeinheit 20 mit dem daran angeordneten Fokussiersystem sind vorzugsweise fluiddicht ausgestaltet, sodass auch feuchte bzw. wasserführende Rohre inspiziert werden können.

Weil beim Vorschub der Schiebeeinheit 21 in einem Rohr sich die Schiebeeinheit ständig bewegt und damit sich auch die Blickrichtung der Kameraeinheit ständig verändern kann, ist es wichtig, dass das betrachtete Motiv trotz ständiger Bewegung immer scharf abgebildet wird. Durch das erfindungsgemäße Fokussiersystem, das ein automatisches Einstellen bzw. Verändern der Brennweite der Flüssiglinse in Echtzeit und in Abhängigkeit des Abstandes zwischen der Flüssiglinse und dem betrachteten Objekt ermöglicht, wird dies gewährleistet.

Ein automatisches Einstellen bzw. Verändern des Fokus bzw. der Brennweite der Flüssiglinse in Echtzeit ist insbesondere dann vorteilhaft, wenn sich die Kameraeinheit bzw. die Schiebeeinheit einem Hindernis nähert. Dadurch wird bei einer Annäherung der Kameraeinheit an ein Objekt dieses immer scharf abgebildet.

In einer Ausgestaltung der Erfindung kann es vorgesehen sein, dass die Kameraeinheit von einer automatischen Fokussierung in eine manuelle Fokussierung umschaltbar ist. Dies ist etwa dann vorteilhaft, wenn Details schargestellt werden sollen, die sich außerhalb der optischen Achse OL der Flüssiglinse befinden.

Ein weiterer Vorteil des erfindungsgemäßen Fokussiersystems liegt darin, dass aufgrund der vorgesehenen Flüssiglinse eine nahezu verschleiß freie Fokussierung möglich ist, was die Lebensdauer des Fokussiersystems erheblich verlängern kann. Ferner zeichnen sich die verwendeten Flüssiglinsen durch ihre Schockunempfindlichkeit bzw. Erschütterungsstabiltät aus, was beim Einsatz in rauen Umgebungen, etwa in wasserführenden Kanalrohren von Vorteil ist.

Vorstehend ist die Erfindung anhand eines Inspektionssystems für Abwasserrohre bzw. Abwasserkanäle beschrieben worden. Der Einsatz des erfindungsgemäßen Inspektionssystems ist allerdings nicht auf die Inspektion von Abwasserrohre bzw. Abwasserkanäle beschränkt. Vielmehr können mit dem erfindungsgemäßen Inspektionssystem auch Rohre bzw. Hohlräume von Industrieanlagen oder schwer zugängliche Bereiche, etwa in Atomkraftwerken oder anderen Bauwerken bzw. Anlagen inspiziert werden. Beispielsweise können Rotorblätter von Windkraftanlagen inspiziert werden.

### Bezugszeichen:

- 1: Fokussiersystem
- 5: Rohr, z.B. Kanalrohr
- 6: Rohrwandung bzw. Innenwandung des Kanalrohres oder Objekt im Rohr
- 10: Inspektionssystem, insbesondere Kanalinspektionssystem
- 12: Anzeige / Kontrolleinheit
- 15: Inspektionswagen, z.B. Kamerawagen
- 16: Speichereinrichtung und/oder Datenverarbeitungseinrichtung
- 18: Sende-/Empfangseinheit zur drahtlosen Datenübertragung
- 20: Kamerakopf bzw. Kameraeinheit
- 21: Schiebeeinheit mit Kamerakopf (Schiebekamera)
- 22: Beleuchtungseinheit (z.B. LED-Ring)
- 23: Leuchtmittel (z.B. LED)
- 25: Hebeeinheit des Inspektionswagens
- 30: Abstandsmessvorrichtung
- 30': erste Abstandsmessvorrichtung
- 30": zweite Abstandsmessvorrichtung
- 31: Steuereinrichtung (z.B. Mikrocontroller)
- 32: Treiber
- 33: Flüssiglinse
- 34: Bildaufnahmeeinrichtung (z.B. CCD-Bildsensor)
- 35: Umlenkeinrichtung
- 36: Umlenkspiegel
- 37: Strahlteiler (z.B. halbdurchlässiger Spiegel)
- 40: Haspel
- 45: Schiebeaal
- a: Abstand zwischen Abstandsmessvorrichtung und Objekt
- a': Abstand zwischen Linse bzw. Kamerakopf und Objekt
- δ: horizontaler Versatz zwischen Abstandsmessvorrichtung und Linse
- IR: Infrarotstrahlung
- LA: Längsachse des Inspektionssystems bzw. des Kamerakopfes
- OA: optische Achse der Abstandsmessvorrichtung 30
- OL: optische Achse der Linse 33
- QA: Querachse des Inspektionswagens

## Patentansprüche

1. Fokussiersystem (1) für eine Kameraeinheit (20) eines Rohrinspektionssystems, umfassend
- eine Abstandsmessvorrichtung (30) zum Messen eines Abstandes von der Abstandsmessvorrichtung (30) zu einem Objekt (6), wobei die Abstandsmessvorrichtung (30) eine optische Abstandsmessvorrichtung umfasst,
- eine mit der optischen Abstandsmessvorrichtung (30) operativ gekoppelte Steuereinrichtung (31), wobei die optische Abstandsmessvorrichtung (30) der Steuereinrichtung (31) Abstandsdaten bereitstellt, und
- eine mit der Steuereinrichtung (31) operativ gekoppelte und als Flüssiglinse (33) ausgestaltete optische Linse,
wobei die optische Abstandsmessvorrichtung (30) so relativ zur Flüssiglinse (33) angeordnet ist, dass die optische Achse (OA) der optischen Abstandsmessvorrichtung (30) parallel zur optischen Achse (OL) der Flüssiglinse (33) verläuft, und
wobei die Steuereinrichtung (31) angepasst ist, anhand der von der optischen Abstandsmessvorrichtung (30) bereitgestellten Abstandsdaten die Brennweite der Flüssiglinse (33), vorzugsweise in Echtzeit einzustellen.

2. Fokussiersystem nach dem vorhergehenden Anspruch, wobei zwischen der Steuereinrichtung (31) und der Flüssiglinse (33) eine Treiberschaltung (32) angeordnet ist, die operativ mit der Steuereinrichtung (31) und mit der Flüssiglinse (33) gekoppelt ist und die angepasst ist, die Flüssiglinse (33) mit einer elektrischen Spannung zu beaufschlagen.

3. Fokussiersystem nach einem der vorhergehenden Ansprüche, wobei die optische Abstandsmessvorrichtung (30) eine Infrarotlicht-Abstandsmessvorrichtung mit zumindest einer Infrarotlicht emittierenden Diode und mit zumindest einer Infrarot-Photodiode, insbesondere Multi-Element-Photodiode oder Lateraldiode, umfasst.

4. Fokussiersystem nach einem der vorhergehenden Ansprüche, wobei die optische Abstandsmessvorrichtung (30) eine erste Abstandsmessvorrichtung (30') und zumindest eine zweite Abstandsmessvorrichtung (30") umfasst, wobei die zumindest eine zweite Abstandsmessvorrichtung (30") beabstandet zur ersten Abstandsmessvorrichtung (30') angeordnet ist, und wobei die optische Achse der ersten Abstandsmessvorrichtung (30') und die optische Achse der zumindest einen zweiten Abstandsmessvorrichtung (30") im Wesentlichen parallel zur optischen Achse der Flüssiglinse (33) verlaufen.

5. Fokussiersystem nach dem vorhergehenden Anspruch, wobei die Steuereinrichtung (31) angepasst ist, anhand der von der ersten Abstandsmessvorrichtung (30') und der von der zumindest einen zweiten Abstandsmessvorrichtung (30") bereitgestellten Abstandsdaten die Brennweite der Flüssiglinse (33) einzustellen, wobei die Steuereinrichtung (31) vorzugsweise angepasst ist, aus den von der ersten Abstandsmessvorrichtung (30') und aus den von der zumindest einen zweiten Abstandsmessvorrichtung (30") bereitgestellten Abstandsdaten einen mittleren Abstand zum Objekt (6) zu ermitteln und anhand des mittleren Abstandes die Brennweite der Flüssiglinse (33) einzustellen.

6. Fokussiersystem nach einem der vorhergehenden Ansprüche 1 bis 3, wobei das Fokussiersystem eine Umlenkeinrichtung (35) aufweist, die angepasst ist, den Strahlengang der optischen Abstandsmessvorrichtung (30) so umzulenken, dass dieser im Wesentlichen koaxial zur optischen Achse (OL) der Flüssiglinse (33) durch die Flüssiglinse geführt wird.

7. Fokussiersystem nach dem vorhergehenden Anspruch, wobei die Umlenkeinrichtung (35) einen Strahlteiler (37) aufweist, der in der optischen Achse (OL) der Flüssiglinse (33) angeordnet ist und/oder wobei die Umlenkeinrichtung (35) zumindest einen Umlenkspiegel (36) aufweist.

8. Fokussiersystem nach einem der vorhergehenden Ansprüche, wobei die Steuereinrichtung (31) angepasst ist, beim Einstellen der Brennweite der Flüssiglinse (33) einen horizontalen Versatz (δ) zwischen der Flüssiglinse (33) und der optischen Abstandsmessvorrichtung (30, 30'; 30") zu berücksichtigen.

9. Fokussiersystem nach einem der vorhergehenden Ansprüche, wobei das Fokussiersystem von einem manuellen Betriebsmodus in einen automatischen Betriebsmodus zum Einstellen der Brennweite umschaltbar ist.

10. Kameraeinheit (20) für ein Rohrinspektionssystem (10), umfassend eine Bildaufnahmeeinrichtung (34) und ein der Bildaufnahmeeinrichtung zugeordnetes Fokussiersystem (1) nach einem der vorhergehenden Ansprüche.

11. Kameraeinheit nach dem vorhergehenden Anspruch, wobei die Bildaufnahmeeinrichtung (34) einen digitalen Bildsensor, insbesondere CCD-Bildsensor oder CMOS-Bildsensor, umfasst.

12. Kameraeinheit nach einem der beiden vorhergehenden Ansprüche, wobei der Kameraeinheit eine Beleuchtungseinheit (22) zugeordnet ist, wobei die Beleuchtungseinheit (22) eine Anzahl von Leuchtmittel (23), insbesondere Licht emittierende Dioden (LED), aufweist, die radial um die Flüssiglinse (33) des Fokussiersystems (1) herum angeordnet sind, wobei die Beleuchtungseinheit (22) einen Ring aufweist, an dem die Leuchtmittel (23) angeordnet sind und wobei die Abstandsmessvorrichtung (30) an dem Ring angeordnet ist.

13. Kameraeinheit nach einem der Ansprüche 10 bis 12, wobei die Kameraeinheit (20) eine Speicher- und/oder Datenverarbeitungseinrichtung (16) aufweist oder mit einer Speicher- und/oder Datenverarbeitungseinrichtung (16) koppelbar ist, zum Speichern oder Zwischenspeichern der von der Kameraeinheit aufgenommenen Bilder, wobei der Kameraeinheit (20) Detektionsmittel zugeordnet sind zum Detektieren, ob zwischen der Kameraeinheit und einer externen Kontrolleinheit (12) Daten übertragbar sind, wobei die Detektionsmittel angepasst sind, der Steuereinrichtung (31) zu signalisieren, dass zwischen der Kameraeinheit und der externen Kontrolleinheit (12) keine Daten übertragbar sind, und wobei die Steuereinrichtung (31) angepasst ist, in einen automatischen Betriebsmodus zum Einstellen der Brennweite der Flüssiglinse (33) umzuschalten und die aufgenommenen Bilder in der Speicher- und/oder Datenverarbeitungseinrichtung (16) zu speichern, wenn keine Daten übertragbar sind, .

14. Rohrinspektionssystem (10), aufweisend eine Kameraeinheit (20) nach einem der Ansprüche 10 bis 13, wobei die Kameraeinheit (20) vorzugsweise schwenkbar an einem Fahrwagen (15) des Rohrinspektionssystems oder an einer Schiebeeinheit (21) des Rohrinspektionssystems angeordnet ist.

## Claims

1. Focusing system (1) for a camera unit (20) of a pipe inspection system, comprising
- a distance measuring device (30) for measuring a distance from the distance measuring device (30) to an object (6), wherein the distance measuring device (30) comprises an optical distance measuring device,
- a controller (31) operatively coupled to the optical distance measuring device (30), wherein the optical distance measuring device (30) provides distance data to the controller (31), and
- an optical lens operatively coupled to the controller (31), the optical lens being designed as a liquid lens (33),
wherein the optical distance measuring device (30) is arranged relative to the liquid lens (33) such that the optical axis (OA) of the optical distance measuring device (30) extends in parallel with the optical axis (OL) of the liquid lens (33), and wherein the controller (31) is adapted in order to adjust the focal length of the liquid lens (33), preferably in real time, on the basis of the distance data provided by the optical distance measuring device (30).

2. Focusing system according to the preceding claim, wherein a driver circuit (32) is arranged between the controller (31) and the liquid lens (33), which circuit is operatively coupled to the controller (31) and the liquid lens (33) and is adapted in order to apply a voltage to the liquid lens (33).

3. Focusing system according to either of the preceding claims, wherein the optical distance measuring device (30) comprises an infrared-light distance measuring device having at least one infrared-light-emitting diode and at least one infrared photodiode, in particular a multi-element photodiode or a lateral diode.

4. Focusing system according to any of the preceding claims, wherein the optical distance measuring device (30) comprises a first distance measuring device (30') and at least one second distance measuring device (30"), wherein the at least one second distance measuring device (30") is arranged at a distance from the first distance measuring device (30'), and wherein the optical axis of the first distance measuring device (30') and the optical axis of the at least one second distance measuring device (30") extend substantially in parallel with the optical axis of the liquid lens (33).

5. Focusing system according to the preceding claim, wherein the controller (31) is adapted in order to adjust the focal length of the liquid lens (33) on the basis of the distance data provided by the first distance measuring device (30') and the distance data provided by the at least one second distance measuring device (30"), wherein the controller (31) is preferably adapted in order to determine an average distance to the object (6) from the distance data provided by the first distance measuring device (30') and from the distance data provided by the at least one second distance measuring device (30") and to adjust the focal length of the liquid lens (33) on the basis of the average distance.

6. Focusing system according to any of the preceding claims 1 to 3, wherein the focusing system comprises a deflecting means (35) that is adapted in order to deflect the beam path of the optical distance measuring device (30) such that it is guided through the liquid lens substantially coaxially with respect to the optical axis (OL) of the liquid lens (33).

7. Focusing system according to the preceding claim, wherein the deflecting means (35) comprises a beam splitter (37) that is arranged in the optical axis (OL) of the liquid lens (33) and/or wherein the deflecting means (35) comprises at least one deflecting mirror (36).

8. Focusing system according to any of the preceding claims, wherein the controller (31) is adapted in order to take into account a horizontal offset (δ) between the liquid lens (33) and the optical distance measuring device (30, 30'; 30") when adjusting the focal length of the liquid lens (33).

9. Focusing system according to any of the preceding claims, wherein the focusing system can be switched from a manual operating mode to an automatic operating mode for adjusting the focal length.

10. Camera unit (20) for a pipe inspection system (10), comprising an image pickup means (34) and a focusing system (1) according to any of the preceding claims that is associated with the image pickup means.

11. Camera unit according to the preceding claim, wherein the image pickup means (34) comprises a digital image sensor, in particular a CCD image sensor or a CMOS image sensor.

12. Camera unit according to either of the two preceding claims, wherein the camera unit is associated with an illumination unit (22), wherein the illumination unit (22) comprises a number of lamps (23), in particular light-emitting diodes (LED), that are arranged radially around the liquid lens (33) of the focusing system (1), wherein the illumination unit (22) comprises a ring on which the lamps (23) are arranged, and wherein the distance measuring device (30) is arranged on the ring.

13. Camera unit according to any of claims 10 to 12, wherein the camera unit (20), for storing or temporarily storing the images captured by the camera unit, comprises a memory and/or data processing means (16) or can be coupled to a memory and/or data processing means (16), wherein the camera unit (20) is associated with detection means for detecting whether data can be transferred between the camera unit and an external control unit (12), wherein the detection means are adapted in order to signal to the controller (31) that data cannot be transferred between the camera unit and the external control unit (12), and wherein the controller (31) is adapted in order to switch into an automatic operating mode for adjusting the focal length of the liquid lens (33) and in order to store the captured images in the memory and/or data processing means (16) when data cannot be transferred.

14. Pipe inspection system (10) comprising a camera unit (20) according to any of claims 10 to 13, wherein the camera unit (20) is preferably pivotably arranged on a cart (15) of the pipe inspection system or on a sliding unit (21) of the pipe inspection system.

## Revendications

1. Système de focalisation (1) destiné à une unité de caméra (20) d'un système d'inspection de tuyaux, comprenant :
- un dispositif de mesure de distance (30) destiné à mesurer une distance entre le dispositif de mesure de distance (30) et un objet (6), dans lequel le dispositif de mesure de distance (30) comprend un dispositif de mesure de distance optique,
- un dispositif de commande (31) couplé de manière opérationnelle audit dispositif de mesure de distance optique (30), dans lequel ledit dispositif de mesure de distance optique (30) fournit des données de distance audit dispositif de commande (31), et
- une lentille optique couplée de manière opérationnelle audit dispositif de commande (31) et configurée comme une lentille liquide (33),
dans lequel le dispositif de mesure de distance optique (30) est disposé par rapport à la lentille liquide (33), de telle sorte que l'axe optique (OA) du dispositif de mesure de distance optique (30) soit parallèle à l'axe optique (OL) de la lentille liquide (33), et dans lequel le dispositif de commande (31) est adapté pour régler la distance focale de la lentille liquide (33), de préférence en temps réel, sur la base des données de distance fournies par le dispositif de mesure de distance optique (30).

2. Système de focalisation selon la revendication précédente, dans lequel un circuit de commande (32) est disposé entre le dispositif de commande (31) et la lentille liquide (33), le circuit de commande est couplé de manière opérationnelle au dispositif de commande (31) et à la lentille liquide (33) et est adapté pour appliquer une tension électrique à la lentille liquide (33).

3. Système de focalisation selon l'une des revendications précédentes, dans lequel le dispositif de mesure de distance optique (30) comprend un dispositif de mesure de distance de lumière infrarouge avec au moins une diode émettrice de lumière infrarouge et avec au moins une photodiode infrarouge, en particulier photodiode à plusieurs éléments ou diode latérale.

4. Système de focalisation selon l'une des revendications précédentes, dans lequel le dispositif de mesure de distance optique (30) comprend un premier dispositif de mesure de distance (30') et au moins un second dispositif de mesure de distance (30"), dans lequel au moins un second dispositif de mesure de distance (30") est disposé à une distance du premier dispositif de mesure de distance (30') et dans lequel l'axe optique du premier dispositif de mesure de distance (30') et l'axe optique d'au moins un second dispositif de mesure de distance (30") sont sensiblement parallèles à l'axe optique de la lentille liquide (33).

5. Système de focalisation selon la revendication précédente, dans lequel le dispositif de commande (31) est adapté pour régler la distance focale de la lentille liquide (33) sur la base des données de distance fournies par le premier dispositif de mesure de distance (30') et des données de distance fournies par au moins un second dispositif de mesure de distance (30"), dans lequel le dispositif de commande (31) est de préférence adapté pour déterminer une distance moyenne par rapport à l'objet (6) à partir des données de distance fournies par le premier dispositif de mesure de distance (30') et des données de distance fournies par au moins un second dispositif de mesure de distance (30") et pour régler la distance focale de la lentille liquide (33) sur la base de la distance moyenne.

6. Système de focalisation selon l'une des revendications 1 à 3 précédentes, dans lequel le système de focalisation comprend un dispositif de déviation (35) adapté pour dévier le trajet du faisceau du dispositif de mesure de distance optique (30), de sorte qu'il traverse la lentille liquide sensiblement coaxialement à l'axe optique (OL) de la lentille liquide (33).

7. Système de focalisation selon la revendication précédente, dans lequel le dispositif de déviation (35) est doté d'un diviseur de faisceau (37) disposé dans l'axe optique (OL) de la lentille liquide (33) et/ou dans lequel le dispositif de déviation (35) comprend au moins un miroir de déviation (36).

8. Système de focalisation selon l'une des revendications précédentes, dans lequel le dispositif de commande (31) est adapté pour prendre en compte un décalage horizontal (δ) entre la lentille liquide (33) et le dispositif de mesure de distance optique (30, 30' ; 30") lors du réglage de la distance focale de la lentille liquide (33).

9. Système de focalisation selon l'une des revendications précédentes, dans lequel le système de focalisation peut être commuté d'un mode de fonctionnement manuel à un mode de fonctionnement automatique pour régler la distance focale.

10. Unité de caméra (20) destinée à un système d'inspection de tuyaux (10), comprenant un dispositif de capture d'image (34) et un système de focalisation (1) affecté au dispositif de capture d'image selon l'une des revendications précédentes.

11. Unité de caméra selon la revendication précédente, dans laquelle le dispositif de capture d'image (34) comprend un capteur d'image numérique, en particulier un capteur d'image CCD ou CMOS.

12. Unité de caméra selon l'une des deux revendications précédentes, dans laquelle une unité d'éclairage (22) est affectée à l'unité de caméra, dans laquelle l'unité d'éclairage (22) est dotée de plusieurs moyens d'éclairage (23), en particulier de diodes électroluminescentes (LED), qui sont disposés radialement autour de la lentille liquide (33) du système de focalisation (1), dans laquelle l'unité d'éclairage (22) présente un anneau sur lequel sont disposés les moyens d'éclairage (23) et dans laquelle le dispositif de mesure de distance (30) est disposé sur l'anneau.

13. Unité de caméra selon l'une des revendications 10 à 12, dans laquelle l'unité de caméra (20) est dotée d'un dispositif de stockage et/ou de traitement de données (16) ou peut être couplée à un dispositif de stockage et/ou de traitement de données (16) pour enregistrer ou mettre en mémoire tampon les images prises par l'unité de caméra, dans laquelle l'unité de caméra (20) est affectée à des moyens de détection pour détecter si des données peuvent être transférées entre l'unité de caméra et une unité de commande externe (12), dans laquelle les moyens de détection sont adaptés pour signaler au dispositif de commande (31) qu'aucune donnée ne peut être transférée entre l'unité de caméra et l'unité de commande externe (12), et dans laquelle le dispositif de commande (31) est adapté pour commuter vers un mode de fonctionnement automatique pour régler la distance focale de la lentille liquide (33) et pour enregistrer les images prises dans le dispositif de stockage et/ou de traitement de données (16), si aucune donnée ne peut être transférée.

14. Système d'inspection de tuyaux (10), comprenant une unité de caméra (20) selon l'une des revendications 10 à 13, dans lequel l'unité de caméra (20) est disposée de préférence de manière pivotante sur un chariot (15) du système d'inspection de tuyaux ou sur une unité coulissante (21) du système d'inspection de tuyaux.
